# EUROPÄISCHE PATENTSCHRIFT

(11) **EP 1 203 454 B1**
(45) Veröffentlichungstag und Bekanntmachung des Hinweises auf die Patenterteilung: **22.10.2003**
(21) Anmeldenummer: 00962225.9
(22) Anmeldetag: 17.08.2000
(51) Int. Cl.: H04B 1/40

(54) **MODULATOR-DEMODULATOR**
MODULATOR-DEMODULATOR
MODULATEUR-DEMODULATEUR

(30) Priorität: 18.08.1999 DE 19939093
(43) Veröffentlichungstag der Anmeldung: 08.05.2002
(73) Patentinhaber: Infineon Technologies AG, 81669 München (DE)
(72) Erfinder: FENK, Josef, D-85386 Eching (DE); THOMAS, Volker, 82205 Gilching (DE); THOMANN, Wolfgang, D-80333 München (DE)
(74) Vertreter: Epping Hermann & Fischer
(86) Internationale Anmeldenummer: DE0002790
(87) Internationale Veröffentlichungsnummer: WO01013528

(56) Entgegenhaltungen:
- EP-A- 0 905 917
- GB-A- 2 310 342
- US-A- 5 894 592

## Beschreibung

Die Erfindung betrifft einen Modulator-Demodulator.

Modulator-Demodulatoren finden beispielsweise in den Sende-Empfangspfaden von Mobilfunkgeräten Verwendung. Bei der Modulation und Demodulation werden Nachrichten in eine Signalform aufbereitet, die die Übertragung der Nachricht über eine größtmögliche Entfernung unter Wahrung des erforderlichen Störabstands gewährleistet.

Bei der Modulation und Demodulation nach dem Codemultiplex (CDMA= Code Division Multiple Access) auch Spread Spectrum Multiplex (SSMA) genannt, ist der Empfangspfad immer in Betrieb, der Sendepfad hingegen nur zeitweise. Die Höhe der Stromaufnahme während des Betriebs bestimmt die maximal mögliche Standby-Zeit. Möchte man für den Modulator als auch den Demodulator nur einen einzigen spannungsgesteuerten Oszillator verwenden, so sind aufgrund der für den Modulator und den Demodulator notwendigen unterschiedlichen Frequenzen Frequenzteiler erforderlich. Bei WCDMA (Wide Band CDMA) wird beispielsweise das Sendesignal mit einer Sendesignalfrequenz von 570 MHz durch einen Teiler mit einem Teilerfaktor 2 aus dem Oszillatorsignal eines spannungsgesteuerten Oszillators mit einer Oszillatorfrequenz von 1140 MHz gewonnen. Im Empfangspfad benötigt man ein Signal mit einer Trägerfrequenz von 380 KHz, so daß bei Verwendung des 1140 MHz Oszillators ein Teiler mit einem Teilerfaktor 3 benötigt wird. Nachteilhafterweise hat jedoch ein Teiler mit einem ungeraden Teilerfaktor eine höhere Stromaufnahme als ein Teiler mit einem geraden Teilerfaktor. Zudem weisen Teiler mit einem ungeraden Teilerfaktor einen unsymmetrischeren Tastgrad auf als Teiler mit einem geraden Teilerfaktor.

In dem Dokument EP 0 905 917 A2 ist ein Modulator-Demodulator, ausgelegt für GSM 900 / DCS 1800 Standard, angegeben, bei dem die für Frequenzmischer, Modulator und Demodulator erforderlichen Trägerfrequenzen mittels mehrerer Oszillatoren und Frequenzteiler erzeugt werden. Der Modulator-Demodulator kann in verschiedenen Frequenzbändern senden und empfangen (Dual Band). Bei GSM erfolgen Senden und Empfangen in Zeitschlitzen und nicht gleichzeitig.

Ein Aufgabe der Erfindung ist es, einen Modulator und Demodulator anzugeben, dessen Stromaufnahme so gering wie möglich ist, um eine möglichst hohe Standby-Zeit zu erreichen.

Die Aufgabe wird erfindungsgemäß durch einen Modulator-Demodulator mit den in Patentanspruch 1 angegebenen Merkmalen gelöst.

Weitere vorteilhafte Ausgestaltungen des erfindungsgemäßen Modulator-Demodulators sind in den abhängigen Patentansprüchen angegeben.

Bei dem erfindungsgemäßen Modulator-Demodulator ist ein spannungsgesteuerter Oszillator vorgesehen, dem eine Teilerkette nachgeschaltet ist. Die Teilerkette weist mehrere hintereinander geschaltete Teiler mit jeweils einem geradzahligen Teilerfaktor auf. Jeder Teiler erzeugt ein Trägersignal und ein dazu orthogonales Trägersignal. Weiterhin ist ein Quadratur-Demodulator für ein Empfangssignal vorgesehen, der mit dem Teiler der Teilerkette verbunden ist, der das Trägersignal mit der benötigten Trägerfrequenz erzeugt. Ein erster Vektormodulator weist Mischer auf, die mit den Teilern der Teilerkette verbunden sind, die die Trägersignale mit den benötigten Trägerfrequenzen erzeugen. Weiterhin ist ein weiterer Teiler mit einem geradzahligen Teilerfaktor vorgesehen, der dem ersten Vektormodulator nachgeschaltet ist. Dem weiteren Teiler ist ein zweiter Vektormodulator zum Erzeugen eines Sendesignals nachgeschaltet.

Vorteilhafterweise weist der Modulator-Demodulator gemäß Patentanspruch 2 ein Tiefpaßfilter auf, das zwischen den ersten Vektormodulator und den weiteren Teiler geschaltet ist. Durch das Tiefpaßfilter können störende Signalanteile herausgefiltert werden.

Eine weitere Ausgestaltungsform des erfindungsgemäßen Modulator-Demodulators sieht gemäß Patentanspruch 3 vor, daß die Teilerfaktoren der Teiler jeweils den Wert 2 aufweisen.

Der erfindungsgemäße Modulator-Demodulator kann gemäß Patentanspruch 4 vorteilhafterweise in einem mobilen Funksystem Verwendung finden.

Der Modulator-Demodulator gemäß Patentanspruch 5 bei dem der zweite Teiler (T2) mit dem Demodulator (DM) verbunden ist, und bei dem der erste Teiler (T1) und der zweite Teiler (T2) mit dem ersten Vektormodulator (VM1) verbunden sind ist vorteilhafter Weise für den UMTS Frequenzplan geeignet und zwar insbesondere bei einer Oszillatorfrequenz fVCO = 1520MHz oder fVCO = 760MHz.

Der Modulator-Demodulator gemäß Patentanspruch 6 bei dem der dritte Teiler (T3) mit dem Demodulator (DM) verbunden ist, und bei dem der zweite Teiler (T2) und der dritte Teiler (T3) mit dem ersten Vektormodulator (VM1) verbunden sind, ist ebenfalls vorteilhafter Weise für den UMTS Frequenzplan geeignet und zwar insbesondere bei einer Oszillatorfrequenz fVCO = 1520MHz.

Der Modulator-Demodulator gemäß Patentanspruch 7, bei dem der zweite Teiler (T2) mit dem Demodulator (DM) verbunden ist, und bei dem der zweite Teiler (T2) und der dritte Teiler (T3) mit dem ersten Vektormodulator (VM1) verbunden sind, ist ebenfalls vorteilhafter Weise für den UMTS Frequenzplan geeignet und zwar insbesondere bei einer Oszillatorfrequenz fVCO = 1520MHz.

Der Modulator-Demodulator gemäß Patentanspruch 8, bei dem der erste Teiler (T1) mit dem Demodulator (DM) verbunden ist und bei dem der erste Teiler (T1) und der zweite Teiler (T2) mit dem ersten Vektormodulator (VM1) verbunden sind, ist ebenfalls vorteilhafter Weise für den UMTS Frequenzplan geeignet und zwar insbesondere bei einer Oszillatorfrequenz fVCO = 760MHz.

Die Erfindung wird im folgenden anhand einer Figur weiter erläutert.

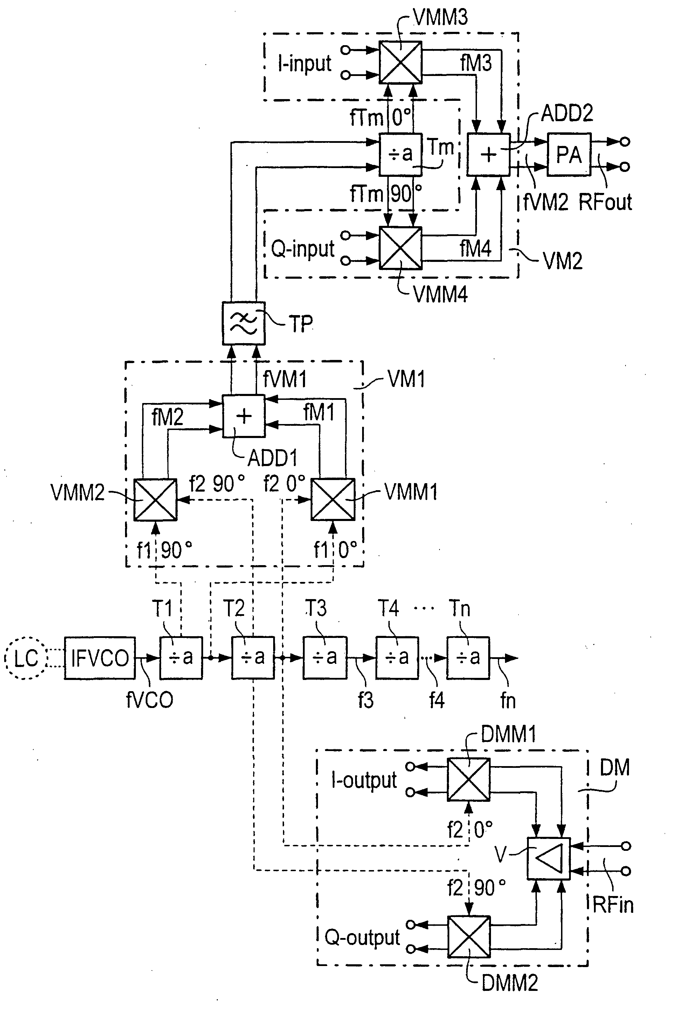

Die Figur zeigt einen erfindungsgemäßen Modulator-Demodulator.

Der erfindungsgemäße Modulator-Demodulator weist einen spannungsgesteuerten Oszillator IFVCO auf, dessen Oszillatorfrequenz fVCO mittels eines LC-Glieds LC einstellbar ist.

Dem spannungsgesteuerten Oszillator IFVCO ist eine Teilerkette nachgeschaltet, die n-Teiler T1, T2, T3, T4, .... Tn aufweist. Der Teiler T1 teilt das Ausgangssignal des spannungsgesteuerten Oszillators IFVCO durch den Teilerfaktor a. Der Teiler T1 erzeugt dabei ein Ausgangssignal mit der Frequenz f1 = fVCO : a und Phasenverschiebung φ = 0° sowie ein Ausgangssignal mit der Frequenz f1 = fVCO : a und einer Phasenverschiebung φ = 90°. Der Teiler T2, der dem Teiler T1 nachgeschaltet ist, teilt dessen Ausgangssignal mit der Frequenz f1 ebenfalls durch den Teilerfaktor a und stellt dieses durch den Teilerfaktor a geteilte Ausgangssignal mit der Frequenz f2 = f1 : a mit einer Phasenverschiebung φ = 0° und einer Phasenverschiebung φ = 90° an seinen Ausgängen zur Verfügung. Die Teiler T3 bis Tn sind entsprechend aufgebaut und teilen jeweils das Ausgangssignal des vorherigen Teilers durch den Teilerfaktor a. Somit liegt an den Ausgängen des Teilers Tn ein Signal mit der Frequenz fn = 0,5ⁿ * fVCO an, wenn der Teilerfaktor a = 2 ist. Allgemein erzeugt der Teiler Tn an seinen Ausgängen das Ausgangssignal mit der Frequenz fn = (1 / a)ⁿ * fVCO. Der Teilerfaktor a ist ein geradzahliger Wert, beispielsweise 2, 4, 8, usw..

Ein Demodulator DM dient zur Demodulation des Empfangssignals RFin. Der Demodulator DM weist hierzu einen Verstärker V auf, an dessen Eingang das Empfangssignal RFin anliegt. Das durch den Verstärker V verstärkte Empfangssignal RFin wird einem ersten Mischer DMM1 des Demodulators DM und einem zweiten Mischer DMM2 das Demodulators DM zugeführt. Die beiden Mischer DMM1 und DMM2 sind in der Figur beispielhaft mit den Ausgängen des zweiten Teilers T2 der Teilerkette verbunden, so daß das um 0° phasenverschobene Signal des zweiten Teilers T2 mit der Frequenz f2 dem ersten Mischer DMM1 und das Ausgangssignal des zweiten Teilers T2 mit der Frequenz f2 und der 90°-Phasenverschiebung dem zweiten Mischer DMM2 des Demodulators DM zugeführt wird. Am Ausgang des ersten Mischers DMM1 ist der demodulierte Imaginärteil des Empfangssignals I-output abgreifbar. Am Ausgang des zweiten Mischers DMM2 ist der demodulierte Realteil des Empfangssignals Q-output abgreifbar. Entsprechend der benötigten Trägerfrequenz an den Eingängen der beiden Mischer DMM1 und DMM2 sind deren Eingänge mit den Ausgängen der jeweiligen Teiler T1, T2 ... Tn verbunden. Erzeugt beispielsweise der Oszillator IFVCO ein Signal mit einer Oszillatorfrequenz fVCO = 1520 MHz und benötigt der Demodulator DM eine Zwischenfrequenz von 380 MHz, so sind die Eingänge der beiden Mischer DMM1 und DMM2 mit den Ausgängen des zweiten Teilers T2 zu verbinden, damit im Empfangszweig ein Gesamtteilerfaktor nRX = 4 gegeben ist, wenn der Teilerfaktor a den Wert 2 annimmt.

Der erfindungsgemäße Modulator-Demodulator weist zusätzlich einen ersten Vektormodulator VM1 auf, der zwei Mischer VMM1 und VMM2 beinhaltet. Je nach benötigter Trägerfrequenz sind die Eingänge der beiden Mischer VMM1 und VMM2 mit den entsprechenden Ausgängen der Teiler T1, T2, T3, T4 ... Tn der Teilerkette verbunden. Im vorliegenden Ausführungsbeispiel gemäß der Figur ist der erste Eingang des ersten Mischers VMM1 mit dem Ausgang des Teilers T1 verbunden, der ein Signal mit Frequenz f1 und der Phasenverschiebung φ = 0° erzeugt. Der zweite Eingang des ersten Mischers VMM1 ist mit dem Ausgang des zweiten Teilers T2 verbunden, der ein Signal mit Frequenz f2 und der Phasenverschiebung φ = 0° erzeugt. Der erste Eingang des zweiten Mischers VMM2 ist mit dem Ausgang des Teilers T1 verbunden, der ein Signal mit der Frequenz f1 und der Phasenverschiebung φ = 90° erzeugt. Der zweite Eingang des zweiten Mischers VMM2 ist mit dem Ausgang des Teilers T2 verbunden, der ein Signal mit Frequenz f2 und einer Phasenverschiebung φ = 90° erzeugt. Der erste Mischer VMM1 mischt damit die beiden Signale mit der Phasenverschiebung φ = 0° und den Frequenzen f1 und f2, so daß am Ausgang des ersten Mischers VMM1 ein Signal mit der Frequenz fM1 = f1 ± f2 und φ = 0°anliegt. Der zweite Mischer VMM2 mischt die Signale mit der Phasenverschiebung φ = 90° und der Frequenz f1 und f2, so daß am Ausgang des zweiten Mischers VMM2 ein Signal mit der Frequenz fM2 = f1 ± f2 und φ = 90° anliegt. Der Addierer ADD 1 bildet die Summe der beiden Signale mit den Frequenzen fM2 und fM1, und liefert an seinem Ausgang ein Signal mit der Frequenz fVM1, das hauptsächlich ein Signal mit der Frequenz fVM1 = f1 + f2 beinhaltet. Durch die Addition der beiden um 90° phasenverschobenen Signale wird der Signalanteil mit der Frequenz f1 - f2 um ca. 40 dB gedämpft.

Mittels eines Tiefpasses TP werden die unerwünschten Signalanteile, beispielsweise die Restsignalanteile der Mischfrequenz f1 - f2 herausgefiltert. Das derart gefilterte Signal wird auf einen weiteren Teiler Tm geführt, der ebenfalls einen Teilerfaktor a aufweist. Das Signal mit der Frequenz fVM1 : a wird einmal um 0° phasenverschoben und einmal um 90° phasenverschoben einem Mischer VMM3 bzw. einem Mischer VMM4 eines zweiten Vektormodulators VM2 zugeführt. Der Mischer VMM3 des Vektormodulators VM2 mischt das 0° phasenverschobene Signal mit der Frequenz fVM1 : a mit dem Imaginärteil des noch nicht modulierten Sendesignals I-input zu einem Signal mit der Frequenz fM3. Dieses wird Signal wird einem Addierer ADD2 zugeführt. Das um 90° phasenverschobene Signal mit der Frequenz fVM1 : a wird mit dem Mischer VMM4 mit dem Realteil des noch nicht modulierten Sendesignals Q-input zu einem Signal mit der Frequenz fM4 gemischt und ebenfalls dem Addierer ADD2 zugeführt. Am Ausgang des Addierers ADD2 ist ein Signal mit der Frequenz fVM2 = fM3 + fM4 abgreifbar. Dieses Signal wird mit einem Sendesignalverstärker PA verstärkt und ist dann als Sendesignal RFout am Ausgang des Sendesignalverstärkers PA abgreifbar.

Je nach Frequenzplan sind die Eingänge der Mischer DMM1, DMM2, VMM1 und VMM2 mit den entsprechenden Ausgängen der Teiler T1, T2, T3, T4 ... Tn zu verbinden. Der Frequenzplan für UMTS (Universal Mobile Telecommunications System ist im folgenden tabellarisch dargestellt. Die erste Spalte der Tabelle gibt die Oszillatorfrequenz fVCO des vom spannungsgesteuerten Oszillator IFVCO zur Verfügung gestellten Signals an. In der zweiten, dritten und vierten Spalte sind jeweils die Frequenzen f1, f2, f3 der an den Ausgängen der entsprechenden Teiler T1, T2 bzw. T3 anliegenden Signalen angegeben. In Spalte 5 ist der für den Demodulator DM notwendige Gesamtteilerfaktor nRX und in Spalte 6 die damit zur Verfügung stehende Trägerfrequenz fRx für die beiden Demodulatoren DM1 und DM2 angegeben, wobei die Trägerfrequenz fRx abhängig vom Gesamtteilerfaktor nRX den Wert der Frequenz f1, f2 bzw. f3 annimmt. Spalte 7 gibt jeweils die Formel für das Ausgangssignal des ersten Vektormodulators VM1 mit der Frequenz fVM1 an. In Spalte 8 ist der Zahlenwert für die Frequenz fVM1, in Spalte 9 der Wert für die Frequenz fTm angegeben. In Spalte 10 schließlich ist das Verhältnis von Sendefrequenz fTm zu Empfangsträgerfrequenz fRx angegeben.

| fVCO MHz | f1 MHz | f2 MHz | f3 MHz | nRX | fRx MHz | fVM1 | fVM1 MHz | fTm MHz | fTm/fRx |
|---|---|---|---|---|---|---|---|---|---|
| 1520 | 760 | 380 | 190 | 4 | 380 | FVCO/2+(fVCO/4) | 1140 | 570 | 1,5=3/2 |
| 1520 | 760 | 380 | 190 | 8 | 190 | FVCO/4+(fVCO/8) | 570 | 285 | 1,5=3/2 |
| 1520 | 760 | 380 | 190 | 4 | 380 | FVCO/4+(fVCO/8) | 570 | 285 | 0,75=3/4 |
| 760 | 380 | 190 | 95 | 2 | 380 | FVCO/2+(fVCO/4) | 570 | 285 | 0,75=3/4 |
| 760 | 380 | 190 | 95 | 4 | 190 | FVCO/2+(fVCO/4) | 570 | 285 | 1,5=3/2 |

Durch die Erfindung wird dabei erreicht, daß auch bei Verwendung von Teilern mit lediglich geradzahligen Teilerfaktoren Teilungsverhältnisse erreicht werden können, bei denen der Teilerverhältnisbruch fTM/fRx im Zähler eine ungerade Zahl aufweist. Durch die Erfindung ist damit auf einfache Weise ein Modulator-Demodulator mit einem Frequenzplan gemäß UMTS realisierbar, der auf Teiler mit ungeraden Teilerfaktoren verzichtet.

Das vom spannungsgesteuerten Oszillator IFVCO erzeugte Signal kann innerhalb des Chips erzeugt werden, der auch die anderen in der Figur gezeigten Komponenten enthält. Die unerwünschte Signalkomponente am Ausgang des ersten Vektormodulators VM1 wird um ca. 40 dB gedämpft.

Durch die Erfindung wird der Sendepfad mit einem guten Duty-Cycle angesteuert und man hat eine ausreichende Phasengenauigkeit der Modulation.

## Patentansprüche

1. Modulator-Demodulator,
bei dem ein spannungsgesteuerter Oszillator (IFVCO) vorgesehen ist,
bei dem eine dem spannungsgesteuerten Oszillator (IFVCO) nachgeschaltete Teilerkette vorgesehen ist, die mehrere hintereinander geschaltete Teiler (T1, T2, T3, T4... Tn) mit jeweils einem geradzahligen Teilerfaktor (a) aufweist und jeder Teiler (T1, T2, T3, T4... Tn) ein Trägersignal und ein dazu orthogonales Trägersignal erzeugt,
bei dem ein Quadraturdemodulator (DM) für ein Empfangssignal vorgesehen ist, der mit dem Teiler (T1, T2, T3, T4... Tn) der Teilerkette verbunden ist, der das Trägersignal mit der benötigten Trägerfrequenz (f₁) erzeugt,
bei dem ein erster Vektormodulator (VM1) vorgesehen ist, dessen Mischer (VMM1, VMM2) mit den Teilern (T1, T2, T3, T4... Tn) der Teilerkette verbunden sind, die die Trägersignale mit den benötigten Trägerfrequenzen (f1, f2) erzeugen,
bei dem ein weiterer Teiler (Tm) mit einem geradzahligen Teilerfaktor (a) vorgesehen ist, der dem ersten Vektormodulator (VM1) nachgeschaltet ist,
bei dem ein zweiter Vektormodulator (VM2) zum Erzeugen eines Sendesignals vorgesehen ist, der dem weiteren Teiler (Tm) nachgeschaltet ist.

2. Modulator-Demodulator nach Anspruch 1,
bei dem ein Tiefpaßfilter (TP) vorgesehen ist, das zwischen den ersten Vektormodulator (VM1) und den weiteren Teiler (Tm) geschaltet ist.

3. Modulator-Demodulator nach Anspruch 1 oder 2,
bei dem die Teiler (T1, T2, T3, T4... Tn, Tm) als Teilerfaktor (a) jeweils den Wert zwei aufweisen.

4. Verwendung des Modulator-Demodulator nach einem der Ansprüche 1 bis 3,
in einem mobilen Funksystem.

5. Modulator-Demodulator nach Anspruch 3,
bei dem der zweite Teiler (T2) mit dem Demodulator (DM) verbunden ist,
bei dem der erste Teiler (T1) und der zweite Teiler (T2) mit dem ersten Vektormodulator (VM1) verbunden sind.

6. Modulator-Demodulator nach Anspruch 3,
bei dem der dritte Teiler (T3) mit dem Demodulator (DM) verbunden ist,
bei dem der zweite Teiler (T2) und der dritte Teiler (T3) mit dem ersten Vektormodulator (VM1) verbunden sind.

7. Modulator-Demodulator nach Anspruch 3,
bei dem der zweite Teiler (T2) mit dem Demodulator (DM) verbunden ist,
bei dem der zweite Teiler (T2) und der dritte Teiler (T3) mit dem ersten Vektormodulator (VM1) verbunden sind.

8. Modulator-Demodulator nach Anspruch 3,
bei dem der erste Teiler (T1) mit dem Demodulator (DM) verbunden ist
bei dem der erste Teiler (T1) und der zweite Teiler (T2) mit dem ersten Vektormodulator (VM1) verbunden sind.

## Claims

1. Modulator-demodulator,
in which a voltage controlled oscillator (IFVCO) is provided,
in which a divider chain connected downstream of the voltage controlled oscillator (IFVCO) and having a plurality of series-connected dividers (T1, T2, T3, T4 ... Tn) with a respective even-numbered division factor (a) is provided, and each divider (T1, T2, T3, T4 ... Tn) produces a carrier signal and a carrier signal which is orthogonal with respect thereto,
in which a quadrature demodulator (DM) for a received signal is provided which is connected to the divider chain's divider (T1, T2, T3, T4 ... Tn) which produces the carrier signal at the required carrier frequency (f₁),
in which a first vector modulator (VM1) is provided whose mixers (VMM1, VMM2) are connected to the divider chain's dividers (T1, T2, T3, T4 ... Tn) which produce the carrier signals at the required carrier frequencies (f1, f2),
in which a further divider (Tm) with an even-numbered division factor (a) is provided which is connected downstream of the first vector modulator (VM1),
in which a second vector modulator (VM2) for producing a transmitted signal is provided which is connected downstream of the further divider (Tm).

2. Modulator-demodulator according to Claim 1,
in which a low-pass filter (TP) is provided which is connected between the first vector modulator (VM1) and the further divider (Tm).

3. Modulator-demodulator according to Claim 1 or 2,
in which the dividers (T1, T2, T3, T4 ... Tn, Tm) each have the value two as division factor (a).

4. Use of the modulator-demodulator according to one of Claims 1 to 3,
in a mobile radio system.

5. Modulator-demodulator according to Claim 3,
in which the second divider (T2) is connected to the demodulator (DM),
in which the first divider (T1) and the second divider (T2) are connected to the first vector modulator (VM1).

6. Modulator-demodulator according to Claim 3,
in which the third divider (T3) is connected to the demodulator (DM),
in which the second divider (T2) and the third divider (T3) are connected to the first vector modulator (VM1).

7. Modulator-demodulator according to Claim 3,
in which the second divider (T2) is connected to the demodulator (DM),
in which the second divider (T2) and the third divider (T3) are connected to the first vector modulator (VM1).

8. Modulator-demodulator according to Claim 3,
in which the first divider (T1) is connected to the demodulator (DM),
in which the first divider (T1) and the second divider (T2) are connected to the first vector modulator (VM1).

## Revendications

1. Modulateur-démodulateur,
dans lequel il est prévu un oscillateur (IFVCO) commandé en tension,
dans lequel il est prévu une chaîne de diviseurs montée en aval de l'oscillateur (IFVCO) commandé en tension, qui comprend plusieurs diviseurs (T1, T2, T3, T4, ...Tn) montés les uns dernière les autres et ayant respectivement un facteur (a) de division pair et chaque diviseur (T1, T2, T3, T4, ...Tn) produit un signal porteur et un signal porteur orthogonal à celui-ci,
dans lequel il est prévu un démodulateur (DM) en quadrature pour un signal de réception qui est relié au diviseur (T1, T2, T3, T4, ...Tn) de la chaîne de diviseurs qui produit le signal porteur ayant la fréquence (f1) porteuse nécessaire,
dans lequel il est prévu un premier modulateur (VM1) de vecteur dont des mélangeurs (VMM1, VMM2) sont reliés aux diviseurs (T1, T2, T3, T4, ...Tn) de la chaîne de diviseurs qui produisent les signaux porteurs ayant les fréquences (f1, f2) porteuses nécessaires,
dans lequel il est prévu un autre diviseur (Tm) ayant un facteur (a) de division pair, qui est monté en aval du premier modulateur (VM1) de vecteur,
dans lequel il est prévu un deuxième modulateur (VM2) de vecteur pour la production d'un signal d'émission, qui est monté en aval de l'autre diviseur (Tm).

2. Modulateur-démodulateur suivant la revendication 1,
dans lequel il est prévu un filtre (TP) passe-bas qui est monté entre le premier modulateur (VM1) de vecteur et l'autre diviseur (Tm).

3. Modulateur-démodulateur suivant la revendication 1 ou 2,
dans lequel le diviseur (T1, T2, T3, T4, ...Tn, Tm) a, comme facteur (a) de division, respectivement la valeur deux.

4. Utilisation du modulateur-démodulateur suivant l'une quelconque des revendications 1 à 3 dans un système de radiocommunication mobile.

5. Modulateur-démodulateur suivant la revendication 3,
dans lequel le deuxième diviseur (T2) est relié au démodulateur (DM),
dans lequel le premier diviseur (T1) et le deuxième diviseur (T2) sont reliés au premier modulateur (VM1) de vecteur.

6. Modulateur-démodulateur suivant la revendication 3,
dans lequel le troisième diviseur (T3) est relié au démodulateur (DM),
dans lequel le deuxième diviseur (T2) et le troisième diviseur (T3) sont reliés au premier modulateur (VM1) de vecteur.

7. Modulateur-démodulateur suivant la revendication 3,
dans lequel le deuxième diviseur (T2) est relié au démodulateur (DM),
dans lequel le deuxième diviseur (T2) et le troisième diviseur (T3) sont reliés au premier modulateur (VM1) de vecteur.

8. Modulateur-démodulateur suivant la revendication 3,
dans lequel le premier diviseur (T1) est relié au démodulateur (DM),
dans lequel le premier diviseur (T1) et le deuxième diviseur (T2) sont reliés au premier modulateur (VM1) de vecteur.
